# EUROPEAN PATENT SPECIFICATION

(11) **EP 0 854 007 B1**
(45) Date of publication and mention of the grant of the patent: **28.08.2002**
(21) Application number: 98200146.3
(22) Date of filing: 20.01.1998
(51) Int. Cl.: B23K 37/053

(54) **Method and installation for providing a piping string in a building**
Verfahren und Vorrichtung zum Vorsehen von Rohrenstrang in einem Bau
Méthode et installation d'une série de tubes pour une construction

(30) Priority: 21.01.1997 NL 1005052
(43) Date of publication of application: 22.07.1998
(73) Proprietor: Olierook, Franciscus Lambertus Maria, 2671 NW Naaldwijk (NL)
(72) Inventor: Olierook, Franciscus Lambertus Maria, 2671 NW Naaldwijk (NL)
(74) Representative: de Bruijn, Leendert C.

(56) References cited:
- EP-A- 0 262 545
- FR-A- 2 045 145
- NL-A- 8 802 725

## Description

The present invention relates to a method according to the pre-characterising clause of Claim 1, and a welding installation according to the pre-characterising part of claim 4.

A method of this type is generally known in the prior art (See FR-2 045 145). For instance, for example for laying pipelines on land or in the sea, use is made of a welding robot to which pipe sections are fed. After two pipe sections have been welded to one another, the welding robot is moved over a length which corresponds to the length of one pipe section and welding is repeated. That is to say the resulting piping string is stationary with respect to the environment. If appropriate, a trench is excavated after welding, in which trench the pipe is placed with the aid of cranes and the like.

A method of this type cannot be used for welding piping strings in buildings such as greenhouses. After all, if the welding robot had to move in the building after welding the piping string, this would mean such a robot would have to make particularly inefficient to and from movements because frequently more than one line has to be laid in a bay. Such lines are in particular heating lines, which, moreover, are used for guiding carts (radiator tube rail carts). It is for this reason that to date welding of such piping strings strings is carried out by hand, with all the associated disadvantages. On the one hand, highly skilled and expensive staff are needed and there are high demands in respect of continued concentration during welding. Moreover, special checking of the welds produced is required, whilst the production of the welders concerned is limited.

French Patent Publication 2 045 145 discloses a pipe laying/welding installation in which pipes are fed in the transverse direction to a mobile welding installation and welded onto the piping string string already laid, after which the welding installation is then moved. That is to say the piping string which has been laid is not moved.

The aim of the present invention is to improve the method described above in such a way that said method can be mechanised at least to a major extent.

This aim is achieved with a method as described above which has the characterising features of Claim 1.

The invention is based on the insight that the welding robot does not, as in the prior art, move while the piping string is stationary, but that the welding robot is stationary while the piping string is pushed out of the welding robot. Consequently it is possible in a simple manner, starting from one position, to produce a number of piping strings in succession, that is to say, for example, five piping strings can be produced for one bay. Joining to bends can be carried out at a later stage, which joining can be carried out in the conventional manner by manual welding. After producing a number of piping strings in this way, the installation according to the invention is, in accordance with the method described above, moved on in a direction essentially perpendicular to the piping strings to the next bay in the greenhouse, where a further number of piping strings are produced.

A pipe section length of about 7 metres may be mentioned as an example, the length of the greenhouse concerned being about 70 metres.

With the construction according to the invention it is particularly efficient to work from the centre gangway of two greenhouse areas. With an embodiment of this type preferably more than one welding robot will be present, one welding robot working towards one side from the centre gangway and the other welding robot working towards the other side.

To be efficient, it is necessary to join at least four pipe sections to one another to form a piping string using the method described above. After all, in all other cases welding by hand is more efficient.

According to an advantageous embodiment of the method according to the invention, both welding and removal take place at some height above the floor surface of the greenhouse. In this way the piping strings are located somewhat higher than the ultimate fixing position and can subsequently simply be lowered. This dispenses with the heavy work of lifting the piping strings as is customary in the prior art, where the pipe sections are first joined on the ground and are then raised.

The method described above also has the advantage that only the centre gangway of the greenhouse is occupied during welding. That is to say other activities can take place in the remaining area of the greenhouse, or it is possible that the remaining area of the greenhouse is not yet ready to be walked on.

The invention also relates to an installation for carrying out the method described above. This installation for producing a piping string from pipe sections by welding in a building such as a greenhouse comprises a welding robot provided with discharge means for said welded pipe sections and guide means adjoining the discharge from said welding robot, which guide means have a length of at least four times the length of the pipe sections.

As indicated above, said installation is preferably provided with a drive for moving in a direction essentially perpendicular to the centre line of the piping string which has just been welded.

Certainly in the case of longer piping strings it is necessary to provide a guide for the piping string which is moved out of the welding robot. Once the piping string concerned is complete, a wave movement of the piping string can be achieved by lifting the start of the string upwards, with the result that said piping string is ejected from the guide and the guide can be used for the production of the next piping string.

In order to be able to carry out welding in an elevated position, the welding installation preferably consists of a subframe and a height-adjustable working platform on which the welding robot is mounted. The discharge means are constructed in such a way that the piping string is pushed away with some force and are preferably constructed as wheels or rollers engaging on the piping string.

If work is carried out from the centre gangway and there is a greenhouse construction on either side thereof, it is preferable to work with two welding robots, each of which operates in one direction.

The invention will be explained in more detail below with reference to an illustrative embodiment shown in the drawing. In the drawing:
Fig. 1 shows a perspective view of the installation according to the present invention installed in the centre gangway of a greenhouse;

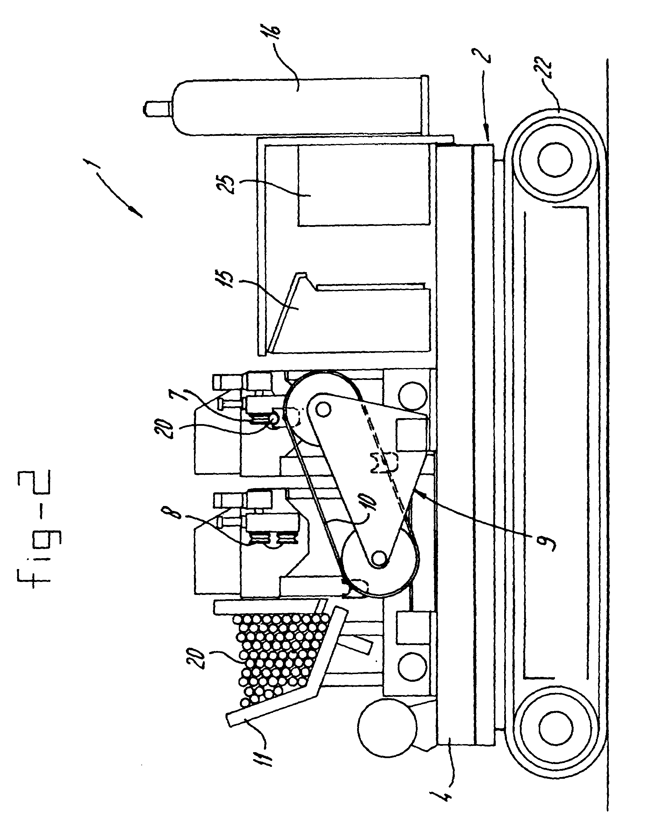

Fig. 2 shows, diagrammatically, a front view of the installation according to the present invention; and
Fig. 3 shows a top view of part of the installation according to the invention, from which further structural details can be seen.

In the figures the installation according to the invention is indicated in its entirety by 1. This installation consists of a subframe 2 provided with a drive, which is not shown in more detail, for two caterpillar tracks 22. A working platform 4 is mounted on the subframe 2 via a scissors construction 3. The height of the working platform 4 with respect to subframe 2 can be adjusted from controls 15 on working platform 4. This adjustment can be achieved with the aid of a hydraulic system, which is not shown.

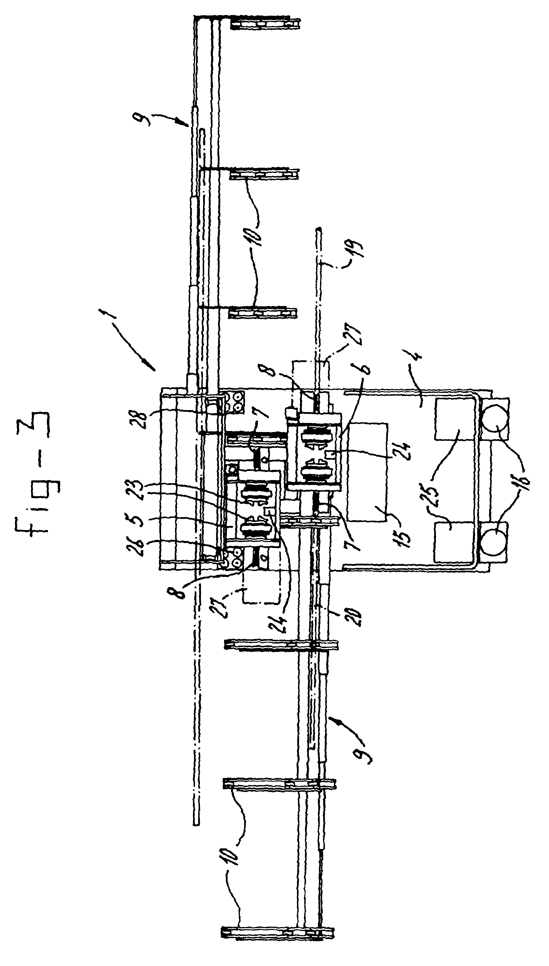

In addition to controls 15, there are two welding robots 5, 6 on the working platform 4 (see Fig. 3). Each welding robot consists of two chucks 23 and a welding head 24. Here welding head 24 is constructed as a so-called MAG welding head, the power source being indicated by 25 and the gas supply by 16. Wire is obtained from store 27. Chucks 23 are rotatably mounted. A number of discharge rollers 8 and a number of feed rollers 7 are on either side of the chucks 23. The start of piping string 19 protrudes from discharge rollers 8, whilst feed rollers 7 engage on a pipe section 20.

A feed conveyor 9 consisting of a telescopic system (hydraulic) on which a number of supporting belts 10 are fitted is provided for each welding robot. A magazine 11 for storing pipe sections 20 is provided, as are conveyor devices 26, 28.

A guide system consisting of a discharge channel 12 of appreciable length (tens of metres), which is provided with bearing rollers 18 at regular intervals, adjoins the welding robots on the discharge side.

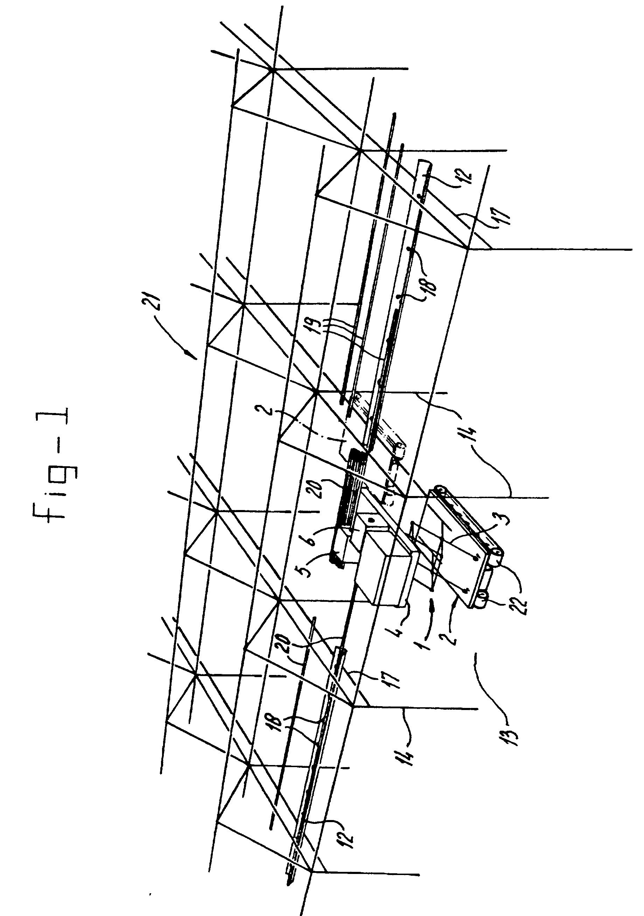

Fig. 1 shows, diagrammatically, a greenhouse comprising uprights 14 and auxiliary trusses 17. The discharge channels 12 are located on such auxiliary trusses.

The installation described above functions as follows. As can be seen from Fig. 1, installation 1 is located in the centre gangway 13 of a greenhouse. A pipe section 20 is moved downwards from magazine 11 and engaged either by conveyor device 26 or conveyor device 28 and moved either onto the supporting belts 10 of welding robot 5 or supporting belts 10 of welding robot 6. On rotation of the supporting belts, the pipe section 20 concerned is brought into the position as shown referring to welding robot 6 in Fig. 3. The pipe section 20 concerned is then moved to the right by feed rollers 7 through the chuck 23 some distance away from the free end of piping string 19 or in contact with the latter. The chucks 23 are then rotated and welding is carried out. Piping string 19 is then moved with the aid of discharge roller 8 further to the right along the discharge channel 12. This is facilitated by the presence of bearing rollers 18 in the discharge channel. The feed and discharge rollers 7, 8 are opened on receiving the pipe concerned and then close when engaging the pipe. If a piping string 19 has been completed by welding, the piping string 19 is swished out of discharge channel 12 by lifting it slightly close to the free end thereof and the next piping string can be produced. As an example, a length of 70 metres is produced by welding 10 pipe sections to one another. The piping strings remain resting on the auxiliary trusses 17 and are subsequently fixed in suspension hooks or other auxiliary constructions, which are fixed to upright 14. The fixing can be definitive or temporary. Welding robot 5 performs the same operations at the same time, pipe sections 20, of course, being fed in after pipe sections have been fed to welding robot 6. A particularly high work rate can be obtained in this way.

After the piping strings have been brought into the desired position, the end section, which in general will be a bend, is fixed by hand and connection to the boilerhouse and the like is provided.

It will be understood that in this way it is no longer necessary to lay the pipes one after the other in the greenhouse and then to weld these. It is possible to load the pipe sections in the magazine 11 in a single central point. The pipe sections can be loaded in bundles, for example using a fork lift truck. It will be understood that it is possible to work at any height, as a result of which in any event hoisting the piping strings at a later stage is avoided as far as possible. The installation described above can be of compact construction and can be transported in a simple manner in a truck and unloaded at the site where the work is to be carried out.

Although the installation has been described above with reference to a preferred embodiment, it must be understood that numerous modifications can be made thereto without going beyond the scope of the present application. This scope is determined solely by the appended claims. For instance, it is possible to install a single welding robot or to install two robots working in the same direction.

## Claims

1. Method for providing a piping string in a building, such as a greenhouse, comprising providing a number of pipe sections and welding said sections to one another to form a piping string, the pipe sections being fed to the welding location and welded to one another in said location, **characterised in that** welding is carried out in a stationary location in said building and the welded pipe sections are then removed from said stationary welding location in the direction of the centre line of said joined pipe sections to a terminal boundary of said building, the welding location remaining stationary and by connecting a further pipe section by welding.

2. Method according to claim 1, wherein welding is carried out using a welding robot which, after the production of one or more piping strings, is moved in a direction essentially perpendicular to the centre line of said piping strings.

3. Method according to claim 1 or 2, wherein welding and discharge of the piping strings takes place some distance above the floor of said building.

4. Welding installation for producing a piping string from pipe sections by welding in a building such as a greenhouse (21), comprising a welding robot (5 6), **characterised in that** said robot is provided with discharge means (8) for said welded pipe sections and guide means (12) adjoining the discharge from said welding robot, which guide means have a length of at least four times the length of the pipe sections.

5. Welding installation according to claim 4, provided with a drive for moving essentially perpendicular to the centre line of said piping string.

6. Welding installation according to claim 4 or 5, wherein said guide means comprise a section provided with bearing means (18) at regular intervals.

7. Welding installation according to one of claims 4-6, wherein the welding installation comprises a subframe (2) and a working platform (4), the welding robot being mounted on said working platform and said working platform being adjustable in height with respect to said subframe.

8. Welding installation according to one of the claims 4-7, wherein said discharge means (8) comprise wheels which engage on the piping string.

9. Welding installation according to one of claim 4-8, wherein said welding installation comprises two welding robots working in opposing directions.

## Patentansprüche

1. Verfahren zur Bereitstellung eines Rohrstrangs in einem Gebäude, wie zum Beispiel einem Gewächshaus, bei dem man mehrere Rohrabschnitte bereitstellt und zur Bildung eines Rohrstrangs miteinander verschweißt, wobei die Rohrabschnitte der Schweißstelle zugeführt und dort miteinander verschweißt werden, **dadurch gekennzeichnet, daß** das Verschweißen an einer stationären Stelle in dem Gebäude durchgeführt wird und die verschweißten Rohrabschnitte dann von der stationären Schweißstelle in Richtung der Mittellinie der miteinander verbundenen Rohrabschnitte zu einer Endbegrenzung des Gebäudes entfernt werden, wobei die Schweißstelle stationär bleibt, und ein weiterer Rohrabschnitt durch Schweißen verbunden wird.

2. Verfahren nach Anspruch 1, bei dem das Schweißen unter Verwendung eines Schweißroboters durchgeführt wird, der nach der Herstellung eines oder mehrerer Rohrstränge in einer im Wesentlichen senkrecht zur Mittellinie der Rohrstränge verlaufenden Richtung bewegt wird.

3. Verfahren nach Anspruch 1 oder 2, bei dem das Schweißen und Abführen der Rohrstränge in einem gewissen Abstand über dem Boden des Gebäudes erfolgt.

4. Schweißanlage zur Herstellung eines Rohrstrangs aus Rohrabschnitten durch Schweißen in einem Gebäude, wie zum Beispiel einem Gewächshaus (21), die einen Schweißroboter (5, 6) umfaßt, **dadurch gekennzeichnet, daß** der Roboter mit Abführmitteln (8) für die verschweißten Rohrabschnitte und sich an der Abführung vom Schweißroboter anschließenden Führungsmitteln (12) versehen ist, wobei die Länge der Führungsmittel mindestens das Vierfache der Länge der Rohrabschnitte beträgt.

5. Schweißanlage nach Anspruch 4, die mit einem Antrieb zur im Wesentlichen senkrecht zur Mittellinie des Rohrstrangs verlaufenden Bewegung versehen ist.

6. Schweißanlage nach Anspruch 4 oder 5, bei der die Führungsmittel einen Abschnitt umfassen, der in gleichmäßigen Abständen mit Lagermitteln (18) versehen ist.

7. Schweißanlage nach einem der Ansprüche 4 - 6, die einen Nebenrahmen (2) und eine Arbeitsplattform (4) umfaßt, wobei der Schweißroboter an der Arbeitsplattform angebracht ist und die Arbeitsplattform bezüglich des Nebenrahmens höhenverstellbar ist.

8. Schweißanlage nach einem der Ansprüche 4 - 7, bei der die Abführmittel (8) Räder umfassen, die an den Rohrstrang angreifen.

9. Schweißanlage nach einem der Ansprüche 4 - 8, die zwei in entgegengesetzten Richtungen arbeitende Schweißroboter umfaßt.

## Revendications

1. Procédé pour procurer une file de tuyauterie dans un bâtiment tel qu'une serre, comprenant le fait de procurer un certain nombre de sections de tuyaux et le fait de souder lesdites sections l'une à l'autre pour former une file de tuyauterie, les sections de tuyaux étant alimentées au poste de soudage et étant soudées l'une à l'autre dans ledit poste, **caractérisé en ce que** le soudage est mis en oeuvre à un poste stationnaire dans ledit bâtiment et les sections de tuyaux qui ont été soudées sont alors retirées dudit poste de soudage stationnaire dans la direction de la ligne médiane desdites sections de tuyaux jointes jusqu'à une limite terminale dudit bâtiment, le poste de soudage restant stationnaire et en reliant une section de tuyau supplémentaire par soudage.

2. Procédé selon la revendication 1, dans lequel le soudage est mis en oeuvre en utilisant un robot de soudage qui, après la production d'une ou de plusieurs files de tuyauterie, se déplace dans une direction essentiellement perpendiculaire à la ligne médiane desdites files de tuyauterie.

3. Procédé selon la revendication 1 ou 2, dans lequel le soudage et la décharge des files de tuyauterie ont lieu à une certaine distance au-dessus du sol dudit bâtiment.

4. Installation de soudage pour la production d'une file de tuyauterie à partir de sections de tuyaux par soudage dans un bâtiment tel qu'une serre (21), comprenant un robot de soudage (5, 6), **caractérisé en ce que** ledit robot est muni d'un moyen de décharge (8) pour lesdites sections de tuyaux soudés et un moyen de guidage (12) en position adjacente à la décharge dudit robot de soudage, ledit moyen de guidage possédant une longueur qui représente au moins quatre fois la longueur des sections de tuyaux.

5. Installation de soudage selon la revendication 4, équipée d'une commande pour un déplacement essentiellement perpendiculaire à la ligne médiane de ladite file de tuyauterie.

6. Installation de soudage selon la revendication 4 ou 5, dans laquelle ledit moyen de guidage comprend une section équipée de moyens de support (18) à des intervalles réguliers.

7. Installation de soudage selon l'une quelconque des revendications 4 à 6, dans laquelle l'installation de soudage comprend un châssis auxiliaire (2) et une plate-forme de travail (4), le robot de soudage étant monté sur ladite plate-forme de travail et ladite plate-forme de travail étant réglable en hauteur par rapport audit châssis auxiliaire.

8. Installation de soudage selon l'une quelconque des revendications 4 à 7, dans laquelle ledit moyen de décharge (8) comprend des roues qui entrent en contact avec la file de tuyauterie.

9. Installation de soudage selon l'une quelconque des revendications 4 à 8, dans laquelle ladite installation de soudage comprend deux robots de soudage travaillant dans des directions opposées.
